# EUROPEAN PATENT APPLICATION

(11) **EP 3 000 523 A1**
(43) Date of publication of application: **30.03.2016**
(21) Application number: 15153327.0
(22) Date of filing: 30.01.2015
(51) Int. Cl.: B01D 67/00, B01D 69/02, B01D 69/10

(54) **NANOPOROUS LIQUID FILTERING STRUCTURE WITH FUNCTIONALIZED PORE SURFACES**

(30) Priority: 01.09.2014 KR 20140115552
(71) Applicant: Korea Institute Of Machinery & Materials, Yuseong-gu Daejeon 305-343 (KR)
(72) Inventor: Yoo, Yeong-Eun, Daejeon 305-343 (KR); Yoon, Jaesung, Daejeon 305-343 (KR); Kim, Jeong-Hwan, Daejeon 305-343 (KR); Choi, Doo-Sun, Daejeon 305-343 (KR); Whang, Kyung-Hyun, Daejeon 305-343 (KR); Kim, Nowon, Busan, Republic of Korea (KR); Lee, Yun Jung, Seoul, Republic of Korea (KR); Kim, Seung Hyun, Yeonsu-gu, Incheon, Republic of Korea (KR); Jeon, Tae-Joon, Yongin-si, Gyeonggi-do, Republic of Korea (KR); Kim, Sun Min, Incheon, Republic of Korea (KR); Seo, Young-Ho, Gangwon-do, Republic of Korea (KR); Kim, Daejoong, Seoul, Republic of Korea (KR); Kim, Moon Ki, Suwon-si, Gyeonggi-do, Republic of Korea (KR); Kim, Young-Rok, Ansan-si, Gyeonggi-do, Republic of Korea (KR)
(74) Representative: Delorme, Nicolas

(57) **Abstract**

A liquid filtering structure having high filtering efficiency, excellent transparency, and excellent durability can be provided. The liquid filtering structure includes a filtering layer, wherein the filtering layer includes a nanopore structure unit including a plurality of nanopores and a functional group-containing compound including functional groups at one end, and has selectivity with respect to liquid molecules to be filtered, for example, water molecules, and effectively filter liquid, particularly water by preventing ions or compounds from being passed.

## Description

### BACKGROUND OF THE INVENTION

### (a) Field of the Invention

The present invention relates to a liquid filtering structure. More particularly, the present invention relates to a liquid filtering structure having high filtering efficiency, excellent transparency, and excellent durability.

### (b) Description of the Related Art

As industries are highly advanced, there is an increasing interest in a liquid filtering structure for removing contaminated materials from a fluid.

Particularly, a problem of drinking water that is attributable to environmental pollution and an increase of the population becomes an urgent problem to all mankind.

In a reverse osmosis membrane, that is, an existing representative separation film having high selectivity, the selectivity of water is implemented in such a way so as to transmit only water molecules and block other molecules or ions using free volumes present between polymer chains of polymer materials that form a filtering layer as transmission paths. The free volumes, that is, the transmission paths, are not aligned in one direction or do not have a penetration structure, but are configured to be severely tangled or bent. The free volume very excellent selectivity, but is problematic in that it has very poor transparency because the free volume is very complicated and has a long transmission path although it is a thin filtering layer.

A pore type separation film having a pore structure, such as a nanofilter (NF) or a microfilter (MF), has a penetration type of pore structure and excellent transparency, but has poor selectivity because the size of the pore type separation film is too large for selecting water molecules or specific ions.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a liquid filtering structure having advantages of high filtering efficiency, excellent transparency, and excellent durability.

An exemplary embodiment of the present invention provides a liquid filtering structure including a filtering layer, wherein the filtering layer includes a nanopore structure unit including a plurality of nanopores and a functional group-containing compound including functional groups at one end, the nanopores penetrate the filtering layer in a thickness direction of the filtering layer and have an average diameter of 0.2 nm to 20 nm, and the functional group-containing compound is chemically combined with internal walls of the nanopores.

In accordance with another aspect of the present invention, the liquid filtering structure may further include a porous support layer supporting the filtering layer. In accordance with an implementation example of the present invention, the filtering layer may be stacked on or embedded in the porous support layer.

### BRIEF DESCRIPTION OF THE DRAWINGS

FIG. 1A is a schematic perspective view of a nanopore structure unit including a plurality of nanopores in accordance with an implementation example of the present invention.
FIGS. 1B to 1D are schematic cross-sectional views of nanopore structure units each including a plurality of nanopores in accordance with implementation examples of the present invention.
FIG. 2 is a schematic cross-sectional view of a nanopore structure unit including a filtering layer with which a functional group-containing compound has been combined in accordance with an implementation example of the present invention.
FIG. 3A is a schematic perspective view of a liquid filtering structure including a filtering layer having a nanopore structure unit in accordance with an implementation example of the present invention.
FIG. 3B is a schematic cross-sectional view of a liquid filtering structure including a filtering layer including a nanopore structure unit in accordance with an implementation example of the present invention.
FIG. 4A is a schematic perspective view of a liquid filtering structure including filtering layers including nanopore structure units in accordance with another implementation example of the present invention.
FIG. 4B is a schematic cross-sectional view of a liquid filtering structure including the filtering layers including the nanopore structure units in accordance with another implementation example of the present invention.
FIG. 5 is a schematic diagram illustrating a method of manufacturing a nanopore structure unit in accordance with an implementation example of the present invention.
FIG. 6 is a schematic diagram illustrating a method of manufacturing a liquid filtering structure in accordance with an implementation example of the present invention.
FIG. 7A is a schematic diagram illustrating a method of manufacturing a liquid filtering structure in accordance with another implementation example of the present invention.
FIG. 7B is a schematic cross-sectional view of the liquid filtering structure manufactured using a method of manufacturing a liquid filtering structure in accordance with another implementation example of the present invention.
FIG. 8A is an AFM image of a nanopore structure unit manufactured using a method in accordance with Manufacturing Example 1 of the present invention.
FIG. 8B is a TEM image of a nanopore structure unit manufactured using a method in accordance with Manufacturing Examples 1-1 to 1-3 of the present invention.
FIG. 9 is an AFM image of a nanopore structure unit manufactured using a method in accordance with Manufacturing Examples 2-1 and 2-2 of the present invention.
FIG. 10A is an AFM image of a nanopore structure unit manufactured using a method in accordance with Manufacturing Example 3 of the present invention.
FIG. 10B is an SEM image of a nanopore structure unit manufactured using a method in accordance with Manufacturing Example 3 of the present invention.
FIG. 11 is a SEM photograph of a surface of a polysulfone film, that is, the support layer of a liquid filtering structure manufactured in accordance with Exemplary Embodiment 1 of the present invention, and a surface of a nanopore structure unit implemented on a support layer.
FIG. 12 is a SEM photograph of a liquid filtering structure manufactured in accordance with Exemplary Embodiment 2 of the present invention.
FIG. 13 is a SEM photograph of a liquid filtering structure manufactured in accordance with Exemplary Embodiment 4 of the present invention.
FIG. 14 is a diagram illustrating a process of attaching radicals to the internal walls of nanopores in accordance with Exemplary Embodiment 4 of the present invention.
FIG. 15 is an XPS graph of a liquid filtering structure manufactured in accordance with Exemplary Embodiment 4 of the present invention.
FIG. 16 is a graph illustrating filtering results using a liquid filtering structure manufactured in accordance with Exemplary Embodiment 4 of the present invention.
FIG. 17A is a SEM photograph of the porous support layer of a liquid filtering structure that is used in Exemplary Embodiment 5 of the present invention.
FIG. 17B is a SEM photograph of a liquid filtering structure manufactured in accordance with Exemplary Embodiment 5 of the present invention.
FIG. 18 is a TEM photograph of a process of manufacturing a liquid filtering structure in accordance with Exemplary Embodiment 6 of the present invention.
FIG. 19 is a schematic diagram illustrating a process of combining a functional group compound with the internal walls of the nanopores of a liquid filtering structure manufactured in accordance with Exemplary Embodiment 6 of the present invention.
FIG. 20 is an XPS graph of a liquid filtering structure manufactured in accordance with Exemplary Embodiment 6 of the present invention.

### <Description of symbols>

11a, 11b, 11c, 11d, 21, 31a, 31b, 41a, 41b, 51, 61, 61', 71a, 71b: nanopore structure unit
12a, 12b, 12c, 12d, 22, 32a, 32b, 42a, 42b, 52, 62, 62', 72a, 72b: nanopore
20, 30a, 30b, 40a, 40b: filtering layer
33a, 33b, 43a, 43b, 63, 63', 73a, 73b: porous support layer
34a, 44a, 64, 64', 74b: pore
55, 65: base

The liquid filtering structure in accordance with an aspect of the present invention can be effectively used in a filtering apparatus for purifying a liquid, such as water, because it has high filtering efficiency, excellent transparency, and excellent durability to the extent that it can withstand pressure applied to the structure in a filtering process.

### DETAILED DESCRIPTION OF THE EMBODIMENTS

Hereinafter, the present invention is described in more detail.

A liquid filtering structure in accordance with an aspect of the present invention includes a filtering layer having nanopores. The nanopores penetrate the filtering layer in a thickness direction thereof, and a functional group-containing compound is combined with the internal walls of the nanopores.

In accordance with an implementation example of the present invention, unwanted materials included in a liquid such as water can be easily removed and purified because the functional group-containing compound is combined with the internal walls of the nanopores.

That is, in order to solve both the critical point of the reverse osmosis membrane having excellent selectivity but having low transparency, and the critical point of the pore type separation film having excellent transparency but having low selectivity, the filtering layer includes the nanopore structure unit so as to improve transparency, and the functional group-containing compound is combined with the internal walls of the nanopores so as to improve selectivity.

In other words, the present invention has solved the problems of a conventional separation film and is an inventive technology for providing the internal walls with nanopores using nanopores of a size through which a very small number of water molecules or ions may pass in parallel and a functional group-containing compound capable of controlling a transmission characteristic because the functional group-containing compound differently affects transmitted water molecules or ions. Accordingly, excellent transparency and selectivity can be simultaneously satisfied.

In this specification, a "functional group" means a group that has selectivity through an interaction with liquid molecules to be filtered, for example, water molecules, but has non-selectivity for other molecules. In this case, the interaction means that Van der Waals attraction, electrostatics, or a chemical combination acts between the functional groups and liquid molecules, for example, water molecules.

Furthermore, in this specification, a "functional group-containing compound" may denote a shape in which one end of the compound has been chemically combined with internal walls of nanopores or an independent shape before one end of the compound is chemically combined with the internal walls of nanopores.

In accordance with an implementation example of the present invention, the nanopore structure unit includes a plurality of nanopores, and the nanopores are penetrated in the thickness direction of the filtering layer so that a liquid, such as water, may pass. The nanopores have an average diameter of 0.2 nm to 20 nm. Thus, only water molecules may selectively pass through the nanopores if a compound having proper functional groups is chemically combined with the inner walls of the nanopores.
A functional group-containing compound having functional groups in one end is combined with the inner walls of the nanopores. The chemical combination may be, for example, an amide bond, an ester bond, or a CH₂-NH₂ bond.

In this specification, a compound having functional groups in one end does not mean a case where functional groups are disposed at the uppermost end of the compound, but may include all types of compounds having functional groups at a location where the compound may selectively act on a liquid that passes through nanopores, for example, water molecules that pass through the nanopores in order to perform a filtering function.

The functional group-containing compound may be chemically combined with the internal walls of the nanopores and may be protruded from the internal walls of the nanopores by the length of the compound. The functional group-containing compound may be protruded from the internal walls of the nanopores by a length of 0.5 to 10 nm, for example.

A shape of the cross-section of the filtering layer of the nanopores in the thickness direction is not specially limited, but may be optimized for a more effective purification effect, as necessary. For example, the filtering layer of the nanopores in the thickness direction thereof may have a desired cross-sectional shape through plasma processing.

In accordance with an aspect of the present invention, the nanopore may vertically penetrate the filtering layer in the thickness direction. In this specification, the thickness direction of the nanopore structure unit and the thickness direction of the filtering layer are identical with each other and are interchangeably used.

Furthermore, the nanopore may have a bottleneck shape or a tapered shape in the thickness direction of the filtering layer.

If the nanopore has a bottleneck shape or tapered shape, a minimum diameter of the nanopore may be 10 nm or less. The "minimum diameter" means that the cross-section of each nanopore may have various diameters rather than a single diameter in the thickness direction of the filtering layer. In this case, the minimum diameter has the smallest size.

If a minimum diameter of the nanopore falls within the range and a functional group-containing compound is combined with the internal walls of the nanopores, an effective diameter of the nanopore is changed with respect to a water molecule or a variety of types of ions due to a mechanical, electrical, or chemical interaction. Accordingly, for example, if the liquid is water, the valid diameter of the nanopore with respect to a water molecule is increased, but is reduced with respect to an ion or another compound molecule. Accordingly, the water molecule easily passes through the nanopore, but the ion or another compound does not pass through the nanopore.

If the nanopore has a bottleneck shape, a minimum diameter of the nanopore may correspond to the diameter of a bottleneck part.

If the nanopore has a tapered shape in the thickness direction of the filtering layer, a tilt angle is not specially limited, but may be a range of 1°- 10° to the thickness direction of the filtering layer, that is, a vertical direction.

In accordance with another aspect, the plurality of nanopores of the nanopore structure unit are not limited to a specific arrangement type and density, but the number of nanopores may be 10⁶/mm² or more and the nanopores may be uniformly distributed for effective purification.

The nanopore structure unit may be made of various materials without being limited to specific materials as long as they have a plurality of nanopores. For example, the nanopore structure unit may be made of one or more types of materials selected from a polymer, a copolymer, an organic compound, an inorganic compound, a metal compound, and a carbon compound.

The polymer may be a curable polymer or a soluble polymer.

The curable polymer may be a UV-curable polymer, for example.

The soluble polymer may be a polymer that is soluble in water or alcohol, for example.

The copolymer may be a block copolymer, and may be one or more types selected from PS-b-PAA, PS-b-PEO, PS-b-PLA, PS-b-PMMA, PS-b-PB, and PS-b-PVP, for example. The inorganic compound may be aluminum oxide or silica, for example.

At least part of the filtering layer may have a thickness of 100 nm or less, for example, a thickness of 50 nm or less or 20 nm or less. If at a least part of the filtering layer falls within the range, water permeability may be effective.

The functional group-containing compound may have a variety of types of functional groups depending on the type of liquid to be purified. For example, if the liquid to be purified is water, the functional group-containing compound may include functional groups having selectivity for water molecules. That is, if water is to be purified, a compound including functional groups having selectivity for only water molecules may be used so that other molecules are prevented from passing through nanopores.

If the nanopore has a bottleneck shape in the thickness direction of the filtering layer, the functional group-containing compound may be placed in a bottleneck part, that is, a portion corresponding to a minimum diameter.

In accordance with another implementation example, the functional groups of the functional group-containing compound may include one or more types of functional groups having positive charges and negative charges. If both a functional group-containing compound having positive charges and a functional group-containing compound having negative charges are present in the internal walls of the nanopores, the functional group-containing compound having positive charges and the functional group-containing compound having negative charges may be alternately arranged in the internal walls of the same nanopores.

Alternatively, the functional group-containing compound may include one or more types of functional groups, including polar functional groups and non-polar functional groups. If both a polar functional group-containing compound and a non-polar functional group-containing compound are present in the internal walls of the nanopores, the polar functional group-containing compound and the non-polar functional group-containing compound may be alternately arranged in the internal walls of the same nanopores. In this case, ions or compounds having polarity and compounds not having polarity that are present in water, for example, can be simultaneously removed.

Molecules or ions to be removed and a compound including non-polar or polar functional groups having low affinity may be disposed in the internal walls of nanopores at the inlet part of the nanopore structure unit depending on whether materials to be removed have polarity or not. In this case, a probability that the molecules or ions to be removed flow into the nanopores may be significantly reduced, and thus only materials to pass through the nanopores flow into the nanopores. The materials that have flowed into the nanopores as described above and affinitive functional groups and non-affinitive functional groups may be alternately arranged in the internal walls of the nanopores within the nanopore structure unit so that the materials to pass through the nanopores may smoothly pass through the filtering layer with low energy without being attached within the nanopore structure unit.

The functional group-containing compound may include one or more arginine (R)-phenylalanine (F) units. The functional groups of the one or more arginine (R)-phenylalanine (F) unit may effectively function to purity water because it has selectivity for water molecules.

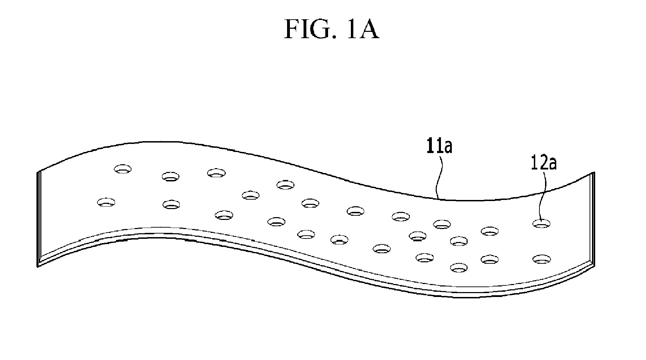

FIG. 1A is a schematic perspective view of a nanopore structure unit 11 a including a plurality of nanopores 12a in accordance with an implementation example of the present invention.

The plurality of nanopores 12a may be formed in the nanopore structure unit 11 a. The nanopores 12a penetrate the filtering layer in the thickness direction of the nanopore structure unit 11 a of the filtering unit so that liquid molecules, such as water molecules, may easily pass through the nanopores.

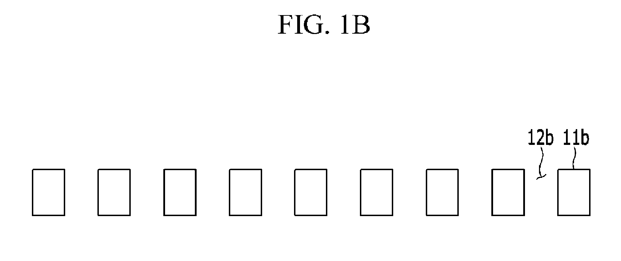

FIGS. 1B to 1D are schematic cross-sectional views of nanopore structure units each including a plurality of nanopores in accordance with implementation examples of the present invention.

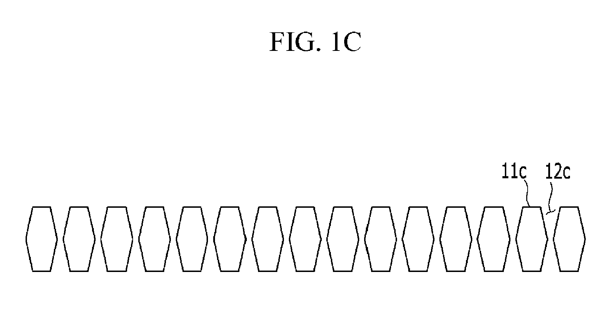

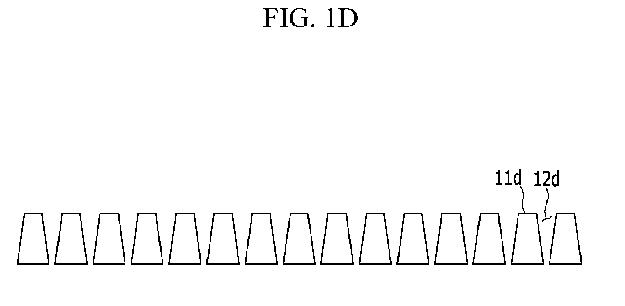

FIG. 1B illustrates a shape in which nanopores 12b vertically penetrates a nanopore structure unit 11 b in the thickness direction thereof. FIG. 1C illustrates a bottleneck shape in which nanopores 12c have bottleneck parts in the thickness direction of a nanopore structure unit 11c. FIG. 1D illustrates a shape in which nanopores 12d have tapered shapes in the thickness direction of a nanopore structure unit 11d.

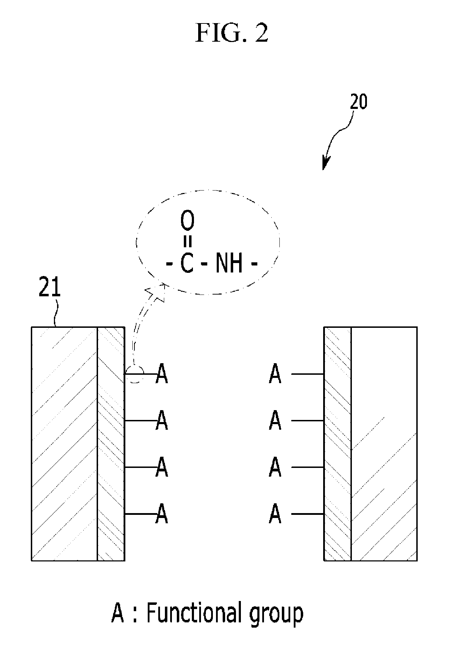

FIG. 2 is a schematic cross-sectional view of a filtering layer 20 in which a functional group-containing compound having functional groups A at its one end is chemically combined with the inner wall of a nanopore 22 of a nanopore structure unit 21 in accordance with an implementation example of the present invention.

A functional group-containing compound, for example, an arginine (R)-phenylalanine (F) unit having functional groups, is chemically combined (e.g., an amide bond (-CONH-) with the inner wall of the nanopore 22.

In this case, the nanopore 22 may have selectivity for water molecules and prevent ions or other compound molecules included in water from passing through the nanopore 22.

The functional group-containing compound may be chemically combined with the inner wall of the nanopore 22, and may protrude from the inner wall of the nanopore 22 by the length of the compound (indicated by a long line in FIG. 2).

In accordance with another aspect of the present invention, the liquid filtering structure may further include a porous support layer for supporting the filtering layer. In this case, the filtering layer may be stacked on or embedded in the porous support layer.

The porous support layer may have a porous structure and thus communicates with the nanopore of the filtering layer. Pores formed in the porous support layer may have various shapes without limit.

The porous support layer may support the filtering layer and is not specially limited if it has a porous structure. For example, the porous support layer may be made of materials such as a polymer, anodized aluminum, or monochloroacetic acids.

The polymer may be one or more types selected from, for example, polysulfone, polyethersulfone, polyphenylsulfone, polyetherethersulfone, polyetherketone, polyetheretherketone, polyphenylene ether, polydiphenylphenylene ether, polyvinylene cellulose acetate, cellulose diacetate, cellulose triacetate, polyphenylene sulfide, nitrocellulose, acetylated methylcellulose, polyacrylonitrile, polyvinyl alcohol, polycarbonate, organic siloxane carbonate, polyester carbonate, organic polysiloxane, polyethylene oxide, polyamide, polyimide, polyamideimide, and polybenzimidazole.

The porous support layer may have a thickness of 10 µm to 500 µm, for example, a thickness of 40 µm to 100 µm. An average size of pores in a surface on the filtering layer side in the porous support layer may be 50 nm to 5 µm, for example, 50 nm to 2 µm. If the average size falls within the range, the filtering layer can be stably supported.

The porous support layer may have a structure of a bi-directional tapered shape in which the size of pores is reduced from a surface on the filtering layer side to a lower part and then increased.

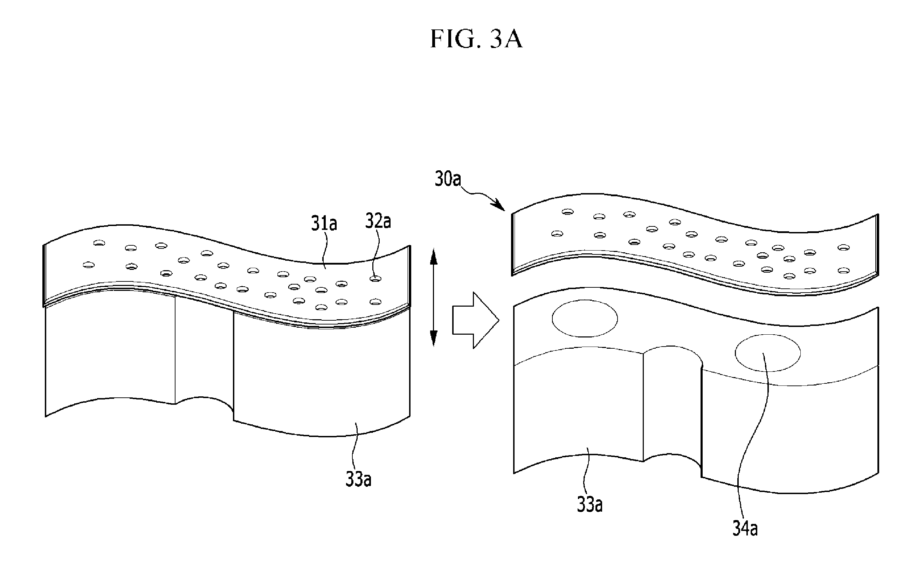

FIG. 3A is a schematic perspective view of a liquid filtering structure including a filtering layer having a nanopore structure unit in accordance with an implementation example of the present invention.

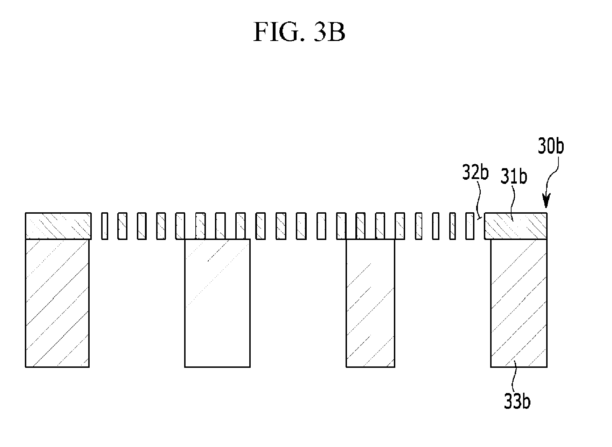

FIG. 3B is a schematic cross-sectional view of a liquid filtering structure including a filtering layer including a nanopore structure unit in accordance with an implementation example of the present invention.

A plurality of nanopores 32a and 32b are respectively formed in nanopore structure units 31 a and 31 b. The nanopores 32a and 32b penetrate filtering layers 30a and 30b in the thickness direction thereof so that liquid molecules, such as water molecules, pass through the nanopores. A functional group-containing compound (not shown) is combined with the inner walls of the nanopores 32a and 32b. The filtering layers 30a and 30b are formed on porous support layers 33a and 33b including pores 34a. The porous support layers 33a and 33b include the pores 34a so that they communicate with the nanopores 32a and 32b of the filtering layers 30a and 30b.

A functional group-containing compound having functional groups at its one end is chemically combined with the inner walls of the nanopores. For example, this chemical combination may include an amide bond, an ester bond, or a CH₂-NH₂ bond.

The chemical combination may be performed by a combination of radicals that are previously present on the internal walls of the nanopores of a nanopore structure unit or may be formed by surface processing such as plasma processing or coating, and the radicals of the functional group-containing compound.

The "radical" means a group capable of forming a chemical combination, but is not specifically limited. For example, radicals, such as -NH₂ present on the internal walls of nanopores or -COOH present in a functional group-containing compound may react with each other to form amide bonds of - CONH-. As a result, the functional group-containing compound may be chemically combined with the internal walls of the nanopores.

The type of radical on the internal walls of the nanopores may be different depending on the type of radical of a functional group-containing compound. The radicals on the internal walls of the nanopores may be -NH₂, - COOH, or -OH.

The radicals previously present on the internal walls of the nanopores may be radicals in the filtering layer of a nanopore structure unit made of a polymer compound having -COOH radicals or an inorganic compound having - OH groups, for example. If a radical is not previously present on the internal walls of nanopores, radicals may be derived through surface processing such as plasma processing or coating. Although radicals are previously present on the internal walls of nanopores, the aforementioned surface processing may be performed in order to increase a concentration of the radicals.

The filtering layer supported by the porous support layer in accordance with an implementation example of the present invention may be considered to be the same as the filtering layer described above.

The nanopores have an average diameter of 0.2 to 20 nm. If a compound having suitable functional groups is combined with the internal walls of the nanopores, only water molecules may selectively pass through the nanopores.

The cross-section of the nanopore in the thickness direction is not limited to a special shape, but the shape of the cross-section of the nanopore may be optimized for a more effective purification effect. For example, the cross-section of the nanopore in the thickness direction may be made to have a desired shape through plasma processing.

In accordance with an aspect of the present invention, the nanopore may have a bottleneck shape or a tapered shape in the thickness direction of the nanopore structure unit. In this case, the nanopore may have a minimum diameter of 10 nm or less. If a minimum diameter of the nanopore falls within the range and a functional group-containing compound is combined with the internal walls of the nanopores, an effective diameter of the nanopore is changed with respect to a water molecule or a variety of types of ions due to a mechanical, electrical, or chemical interaction. Accordingly, for example, if the liquid is water, the valid diameter of the nanometer with respect to a water molecule is increased, but is reduced with respect to an ion or another compound molecule. Accordingly, the water molecule easily passes through the nanopore, but the ion or another compound does not pass through the nanopore.

If the nanopore has a bottleneck shape, a minimum diameter of the nanopore may correspond to the diameter of a bottleneck part.

If the nanopore has a tapered shape in the thickness direction of the filtering layer, a tilt angle is not specifically limited, but may be in a range of 1°- 10° to the thickness direction of the filtering layer, that is, a vertical direction.

In accordance with another aspect, the plurality of nanopores of the nanopore structure unit are not limited to a specific arrangement type and density, but the number of nanopores may be 10⁶/mm² or more and the nanopores may be uniformly distributed for effective purification.

The nanopore structure unit may be made of various materials without being limited to specific materials as long as it has a plurality of nanopores. For example, the nanopore structure unit may be made of one or more types of materials selected from a polymer, a copolymer, an organic compound, an inorganic compound, a metal compound, and a carbon compound.

The polymer may be a curable polymer or a soluble polymer.

The curable polymer may be a UV-curable polymer, for example.

The soluble polymer may be a polymer that is soluble in water or alcohol, for example.

The copolymer may be a block copolymer and may be one or more types selected from PS-b-PAA, PS-b-PEO, PS-b-PLA, PS-b-PMMA, PS-b-PB, and PS-b-PVP, for example. The inorganic compound may be aluminum oxide or silica, for example.

At least a part of the filtering layer may have a thickness of 100 nm or less, for example, a thickness of 50 nm or less or 20 nm or less. If at least a part of the filtering layer falls within the range, water permeability may be effective.

The functional group-containing compound may have a variety of types of functional groups depending on the type of liquid to be purified. For example, if the liquid to be purified is water, the functional group-containing compound may include functional groups having selectivity for water molecules. That is, if water is to be purified, a compound including functional groups having selectivity for only water molecules may be used so that other molecules are prevented from passing through the nanopores.

In accordance with other implementation examples, the functional groups of the functional group-containing compound may be one or more types of functional groups having positive charges and negative charges. If both a functional group compound having positive charges and a functional group compound having negative charges are present in the filtering layer, the functional group-containing compound having positive charges and the functional group-containing compound having negative charges may be alternately arranged in the internal walls of the same nanopores.

Alternatively, the functional group-containing compound may include one or more types of functional groups, including polar functional groups and non-polar functional groups. If both a polar functional group-containing compound and a non-polar functional group-containing compound are present in the internal walls of the nanopores, the polar functional group-containing compound and the non-polar functional group-containing compound may be alternately arranged in the internal walls of the same nanopores. In this case, ions or compounds having polarity and compounds not having polarity that are present in water, for example, can be simultaneously removed.

The functional group-containing compound may include -NH₂ or phenyl groups. The functional group-containing compound may include one or more arginine (R)-phenylalanine (F) units, for example. The functional groups of the one or more arginine (R)-phenylalanine (F) unit may effectively function to purity water because it has selectivity for water molecules.

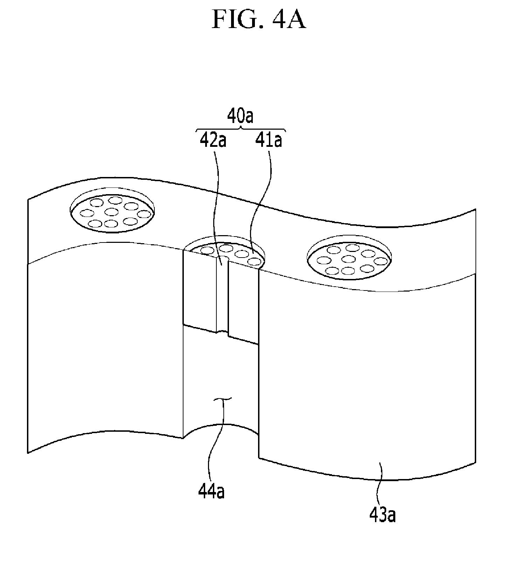

FIG. 4A is a schematic perspective view of a liquid filtering structure including filtering layers including nanopore structure units in accordance with another implementation example of the present invention.

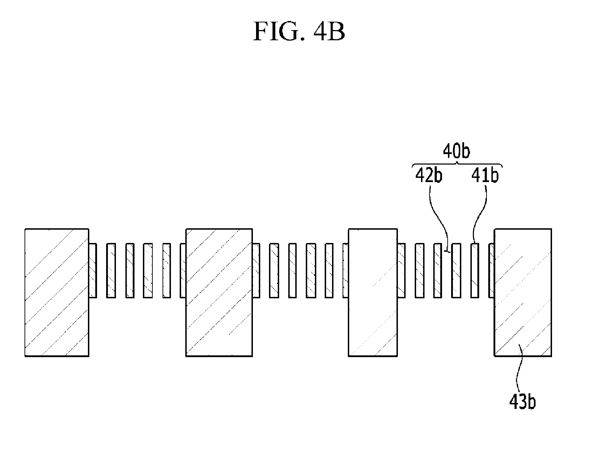

FIG. 4B is a schematic cross-sectional view of a liquid filtering structure including the filtering layers including the nanopore structure units in accordance with another implementation example of the present invention.

A plurality of nanopores 42a and 42b are formed in nanopore structure units 41 a and 41 b. The nanopores 42a and 42b penetrate filtering layers 40a and 40b in a thickness direction thereof so that liquid molecules, such as water molecules, may pass through the nanopores. A functional group-containing compound (not shown) is combined with the inner walls of the nanopores 42a and 42b. The filtering layers 40a are 40b is embedded in porous support layers 43a and 43b having a pores 44a. The porous support layers 43a and 43b have the pores 44a so that the nanopores 42a and 42b of the filtering layers 40a and 40b may communicate with a fluid.

The nanopore structure unit including the nanopores in accordance with an implementation example of the present invention may be manufactured using various methods. For example, if the nanopore structure unit is made of a block copolymer, the nanopore structure unit including the nanopores may be manufactured by coating a mixture of the block copolymer and another polymer and then removing the other polymer through selective etching.

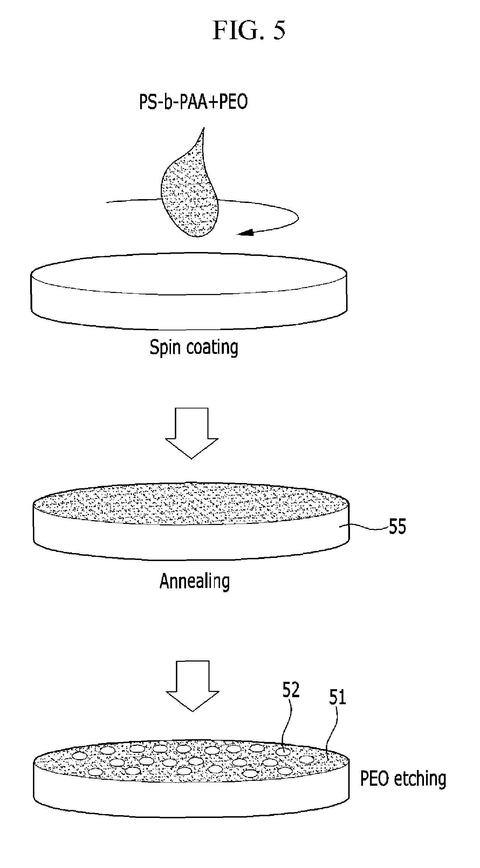

FIG. 5 is a schematic diagram illustrating a method of manufacturing a PS-b-PAA nanopore structure unit in accordance with an implementation example of the present invention

If a nanopore structure unit made of a styrene-acrylic acid block copolymer is to be manufactured, first, a layer is formed by spin-coating a mixture of a styrene-acrylic acid block copolymer and polyethylene oxide and annealing it in a THF solution vapor environment. Thereafter, polyethylene oxide is removed through chemical etching using, for example, a MeOH/NaOH solvent, thereby being capable of obtaining the PS-b-PAA nanopore structure unit having a nanopore structure.

Alternatively, after a styrene-lactic acid block copolymer is manufactured, it may be spin-coated on a wafer and annealed in a solvent vapor atmosphere in order to form PLA cylinder phases in a vertical direction. Thereafter, a PS nanopore structure unit may be manufactured by hydrolyzing PLA using a NaOH solution.

If a nanopore structure unit made of a styrene-ethylene oxide block copolymer is to be manufactured, a mixture (64:1) of the styrene-ethylene oxide block copolymer and DBSA, that is, a low molecular weight mixture, may be spin-coated on a silicon (Si) wafer and then annealed. Thereafter, the nanopore structure unit may be manufactured by removing DBSA.

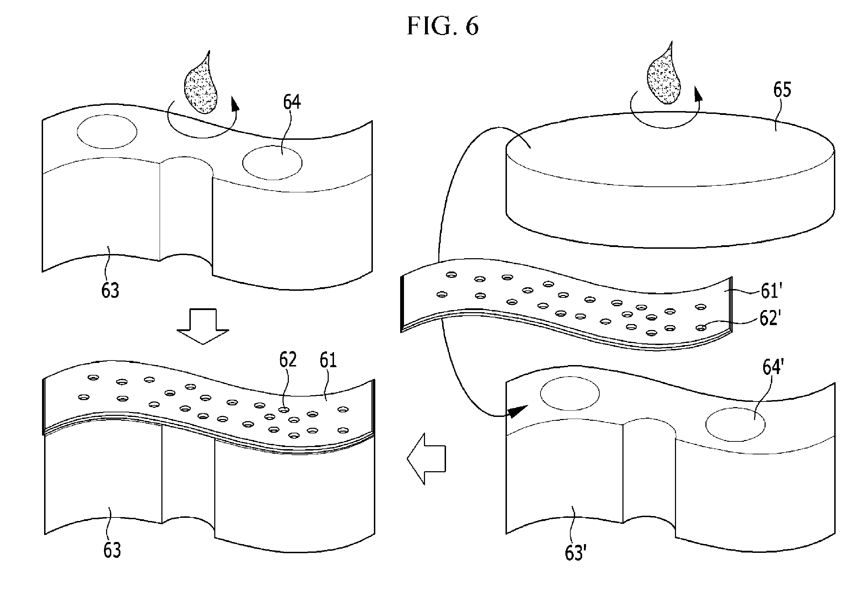

A method of forming the filtering layer on the porous support layer is not specifically limited. FIG. 6 is a schematic diagram illustrating a method of manufacturing a liquid filtering structure in accordance with an implementation example of the present invention.

For example, a nanopore structure unit 61 including nanopores 62 may be directly formed on a porous support layer 63, or may be formed by forming a nanopore structure unit 61' including nanopores 62' on a base 65, such as a Si wafer, and transferring the nanopore structure unit 61' to a surface of a porous support layer 63'.

A functional group-containing compound may be chemically combined with the internal walls of nanopores before or after a nanopore structure unit is formed on a porous support layer. If radicals are present on the internal walls of nanopores, separate surface processing may not be performed, and instead a functional group-containing compound may be combined with the internal walls of the nanopores or may be combined with the internal walls of the nanopores after surface processing is performed. A method of combining a functional group-containing compound with the internal walls of nanopores is not specially limited. For example, a functional group-containing compound may be combined with the internal walls of nanopores by immersing a nanopore structure unit in a solution including the functional group-containing compound.

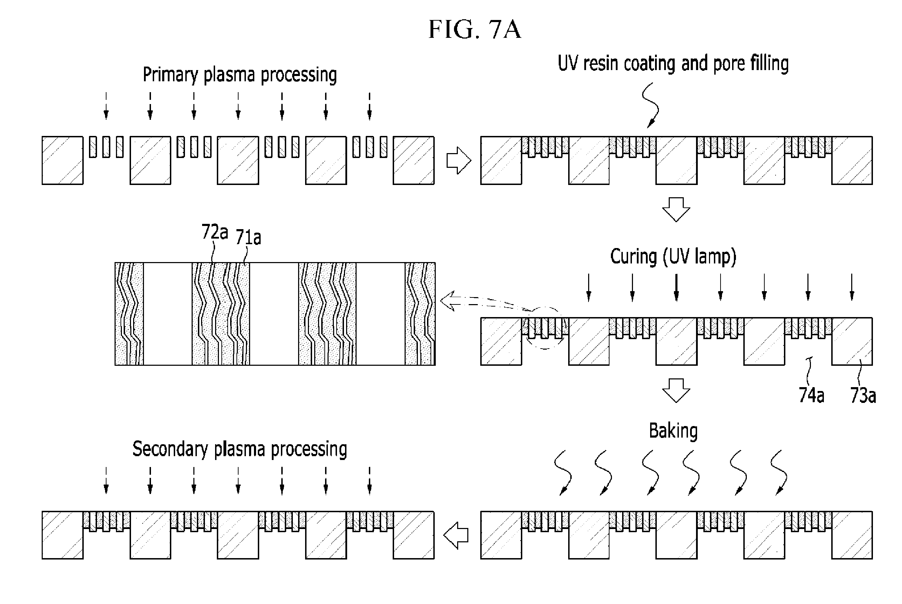

FIG. 7A is a schematic diagram illustrating a method of manufacturing a liquid filtering structure in accordance with another implementation example of the present invention.

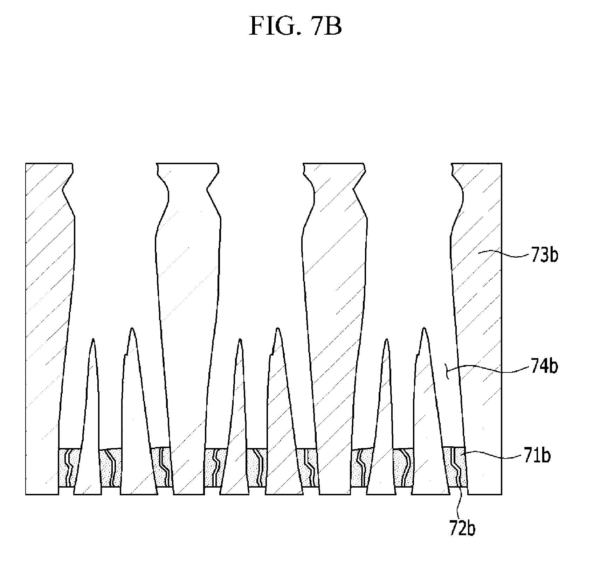

FIG. 7B is a schematic cross-sectional view of the liquid filtering structure manufactured using a method of manufacturing a liquid filtering structure in accordance with another implementation example of the present invention.

A method of forming a filtering layer having a nanopore structure embedded in a pore of a porous support layer may be various. That is, a filtering layer including nanopores may be formed by narrowing the size of a pore so that the nanopores are formed in a part of the pore structure of the original porous support layer. For example, a filtering layer having a nanopore structure may be formed by evaporating inorganic particles such as aluminum oxide within a pore of a porous support layer using vacuum thin film deposition, for example, e-beam evaporation or self-assembly evaporation, for silica powders. In addition to the vacuum thin film deposition, a sputtering method, a pulsed laser deposition method, a chemical vapor deposition (CVD) method, or an atomic layer deposition (ALD) method may be used. As long as a thin film can be formed within a porous support layer, various methods of forming a thin film may be used without being limited to the aforementioned methods. The nanopore structure unit may be made of various metal oxides and metal materials in addition to aluminum oxide.

Alternatively, as illustrated in FIG. 7A, after the size of some of pores is reduced by performing plasma processing on a porous support layer 73a, a curable polymer, for example, a UV-curable polymer, may be coated and cured so that cracks of a nano-size are formed in the filled polymer. Accordingly, a nanopore structure unit 71a including nanopores 72a may be formed. In addition, baking and secondary plasma processing may be performed.

Nanopore structure units 72b embedded in pores 74b of a porous support layer 73b and configured to include nanopores 71 b may be formed as illustrating FIG. 7B.

Exemplary embodiments of the present invention are described in more detail below, but the present invention is not limited to the exemplary embodiments.

### Manufacturing Example 1-1 to Manufacturing Example 1-3

### Manufacturing of PS-b-PAA nanopore structure unit

Polystyrene (70.5k)-b-polyacrylic acid was obtained by putting polystyrene-b-poly(t-butylacrylate) into dichloromethane (CH₂Cl₂) and trifluoroacetic and then performing hydrolysis.

The manufactured polystyrene-b-polyacryl acid and polyethylene oxide (purchased from: Polymer Source Inc., product name: PEG2OH-5k (PEO)) were mixed at ratios of 88.2:11.8, 93.7:6.3, and 93.7:6.3 (volume ratio) and spin-coated on a Si wafer (purchased from: Unisill Technology, size: 4 inches) in a thickness of about 50 nm. Thereafter, the Si wafer was annealed in tetrahydrofuran (THF) vapor for 4 hours. Thereafter, the coated Si wafer was put in a MeOH solvent (MeOH:NaOH = a volume ratio of 9:1) for 12 hours in order to remove polyethylene oxide.

An average diameter of obtained nanopores was about 10 nm, and obtained nanopore structure units had thicknesses of about 55 nm, 55 nm, and 35 nm.

### Manufacturing Example 2-1 and Manufacturing Example 2-2

### Manufacturing of PS nanopore structure unit

A polystyrene-b-polylactic acid (purchased from: Polymer Source Inc., product name: P8980B-SLA) block copolymer was spin-coated on a Si wafer (purchased from: Unisill Technology, size: 4 inches) in a thickness of about 50 nm. Thereafter, the Si wafer was annealed in tetrahydrofuran (THF) vapor for 3 hours. Thereafter, the coated Si wafer was put in a 0.05 M NaOH solvent for 1 hour in order to remove polylactic acid.

An average diameter of obtained nanopores was about 15 nm, and obtained nanopore structure units had respective thicknesses of 50 nm and 70 nm.

### Manufacturing Example 3

### Manufacturing of PS-b-PEO nanopore structure unit

Polystyrene-b-polyethylene oxide (purchased from: Polymer Source Inc., product name: P13138-SEO) and dodecylbenzenesulfonate (DBSA) (purchased from: TCI Chem. Inc., Japan) were mixed at a ratio of 92.5:7.5 (volume ratio) and then spin-coated on a Si wafer (purchased from: Unisill Technology, size: 4 inches or more) in a thickness of about 50 nm. Thereafter, the Si wafer was annealed in benzene vapor for 12 hours. Thereafter, the coated Si wafer was put in deionized water for 2 hours in order to remove DBSA.

An average diameter of obtained nanopores was about 17 nm, and an obtained filtering layer had a thickness of 50 nm.

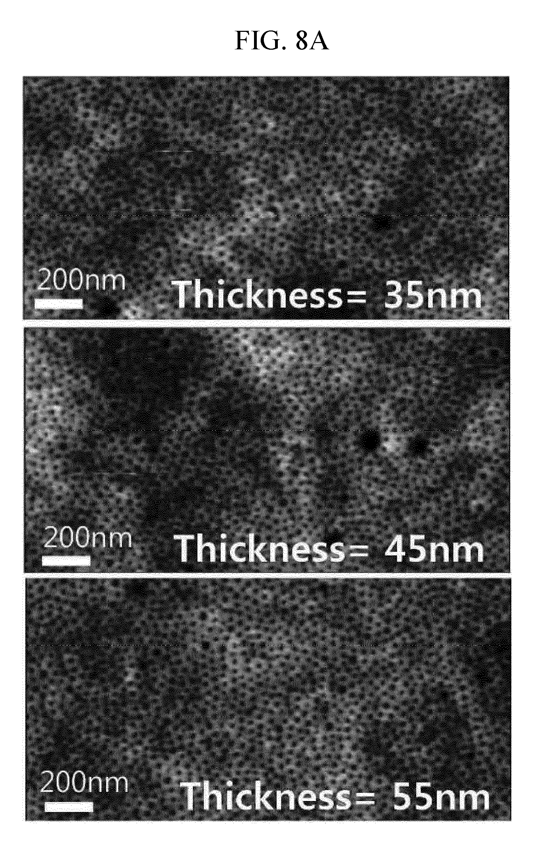

FIG. 8A is an AFM image of the nanopore structure unit including the nanopores manufactured using the method in accordance with Manufacturing Example 1 of the present invention.

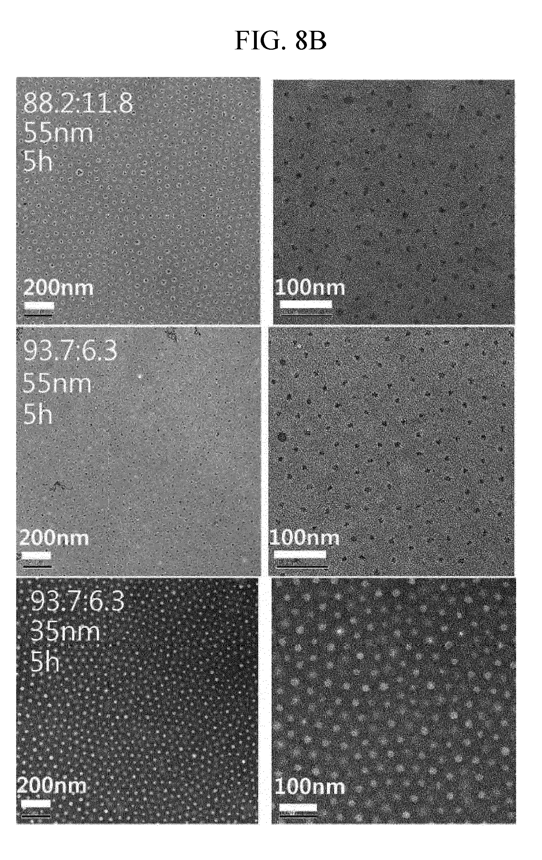

FIG. 8B is a TEM image of the nanopore structure unit including the nanopores manufactured using the method in accordance with Manufacturing Examples 1-1 to 1-3 of the present invention.

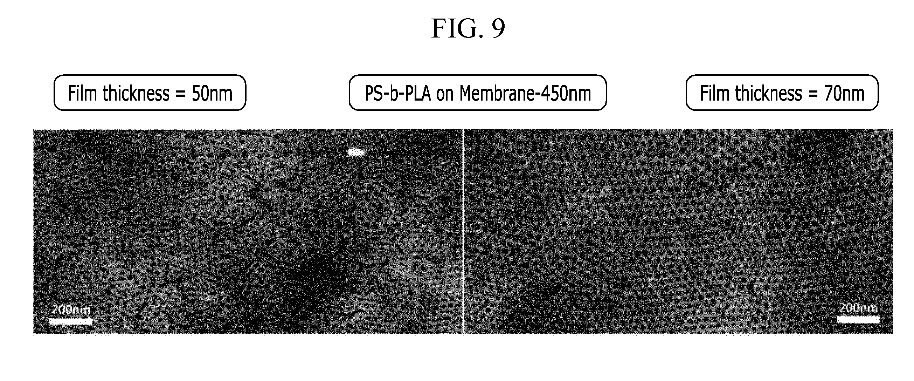

FIG. 9 is an AFM image of the nanopore structure unit including the nanopores manufactured using the method in accordance with Manufacturing Examples 2-1 and 2-2 of the present invention.

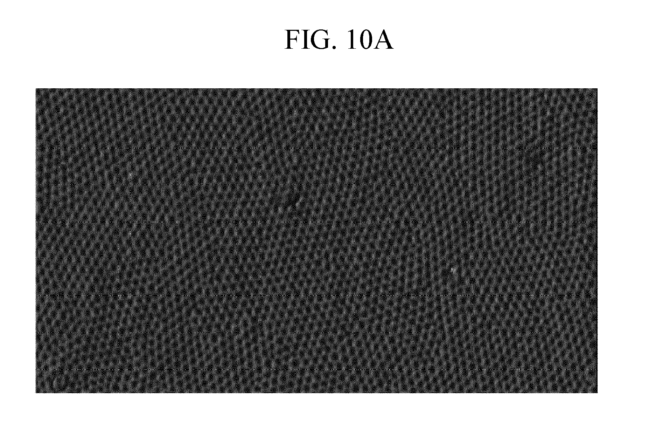

FIG. 10A is an AFM image of the nanopore structure unit including the nanopores manufactured using the method in accordance with Manufacturing Example 3 of the present invention.

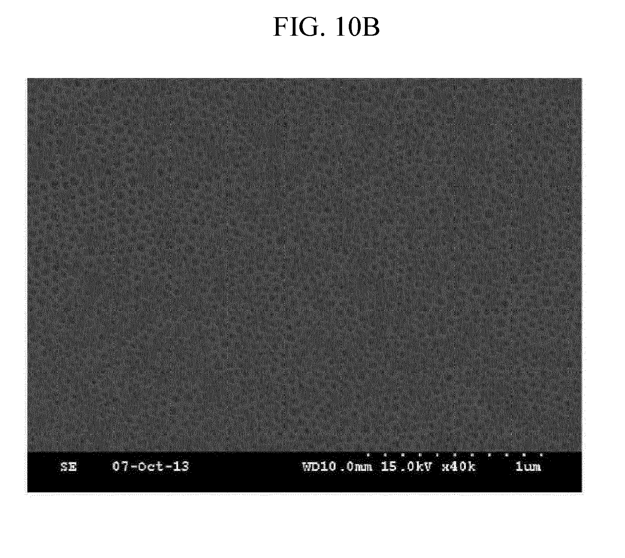

FIG. 10B is a SEM image of the nanopore structure unit including the nanopores manufactured using the method in accordance with Manufacturing Example 3 of the present invention.

From the figures, it may be seen that the nanopores that penetrate the nanopore structure unit in the thickness direction were well formed.

### Exemplary Embodiment 1

### Liquid filtering structure including PS-b-PEO nanopore filtering layer/polysulfone porous support layer (transfer formation)

Polyethersulfone resin at 50g, dimethylformamide at 270g, p-toluenesulfonic acid at 90 g, and polyvinyl pyrrolidone resin at 36 g were put in a dissolver, dissolved at a temperature of 60 °C, and then cooled at a temperature of 40 °C. After the solution was charged with nitrogen, decompression was performed for 12 hours in a vacuum state so that bubbles within the solution were sufficiently removed, and the solution was transferred to a casting surface (preparation step). A polyester film having a width of 300 mm was used as a support layer. Speed was controlled so that the polyester film stayed under humidity of 60 % for 80 seconds, and the solution was made to pass through the casting surface controlled so that the distance between a casting knife and a surface of the polyester film was 250 µm with a width of 250 µm. Thereafter, the polyester film was immersed in a coagulation tank including water at 5 °C. After checking that the solution was sufficiently solidified in the coagulation tank, the solution was moved to a washing tank at 60 °C (phase transfer step). After the washing was finished, redundant water on a surface of the precise filtering film was removed. The filtering film was fixed to a Teflon frame and then dried in an oven, thereby manufacturing a support layer in a flat film state (dry step).

The filtering layer including the nanopores that were formed on the Si wafer manufactured in the manufacturing example 3 was peeled off from the Si wafer using 5 % hydrofluoric acid and then transferred to the manufactured polysulfone porous support layer.

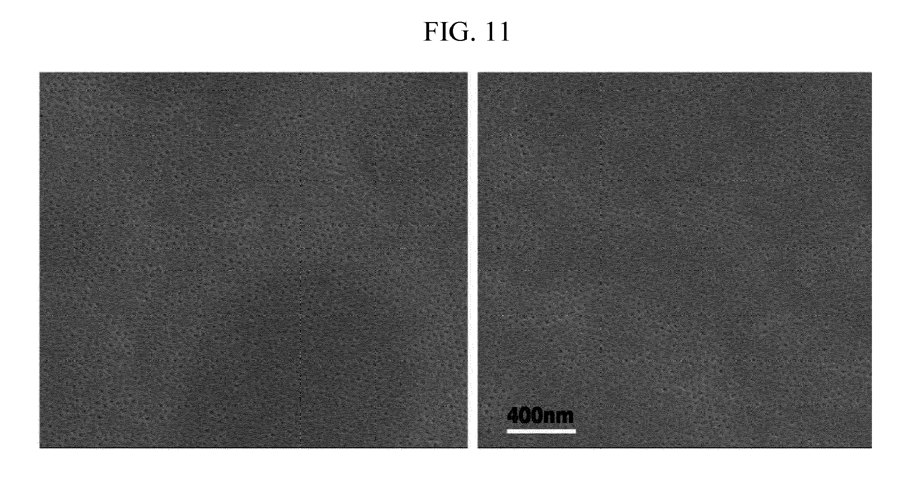

FIG. 11 is a SEM photograph of the liquid filtering structure manufactured in accordance with the exemplary embodiment 1 of the present invention.

From FIG. 11, it may be seen that the filtering layer including the nanopores was well formed in the porous support layer.

### Exemplary Embodiment 2

### Liquid filtering structure including PS-b-PEO nanopore filtering layer/polysulfone porous support layer (direct formation)

Polyethersulfone resin at 50 g, dimethylformamide at 270 g, p-toluenesulfonic acid at 90 g, and polyvinyl pyrrolidone resin at 36 g were put in a dissolver, dissolved at a temperature of 60 °C, and then cooled at a temperature of 40 °C. After the solution was charged with nitrogen, decompression was performed for 12 hours in a vacuum state so that bubbles within the solution were sufficiently removed, and the solution was transferred to a casting surface (preparation step). A polyester film having a width of 300 mm was used as a support layer. Speed was controlled so that the polyester film stayed under humidity of 60 % for 80 seconds, and the solution was made to pass through the casting surface controlled so that the distance between a casting knife and a surface of the polyester film was 250 µm with a width of 250 µm. Thereafter, the polyester film was immersed in a coagulation tank including water at 5 °C. After checking that the solution was sufficiently solidified in the coagulation tank, the solution was moved to a washing tank at 60 °C (phase transfer step). After the washing was finished, redundant water on a surface of the precise filtering film was removed. The filtering film was fixed to a Teflon frame and then dried in an oven, thereby manufacturing a support layer in a flat film state (dry step).

The manufactured polysulfone porous support layer was immersed in deionized water, and a filtering layer directly including nanopores was coated on the polysulfone porous support layer instead of a Si wafer using the same process as that of Manufacturing Example 3, thereby manufacturing a liquid filtering structure.

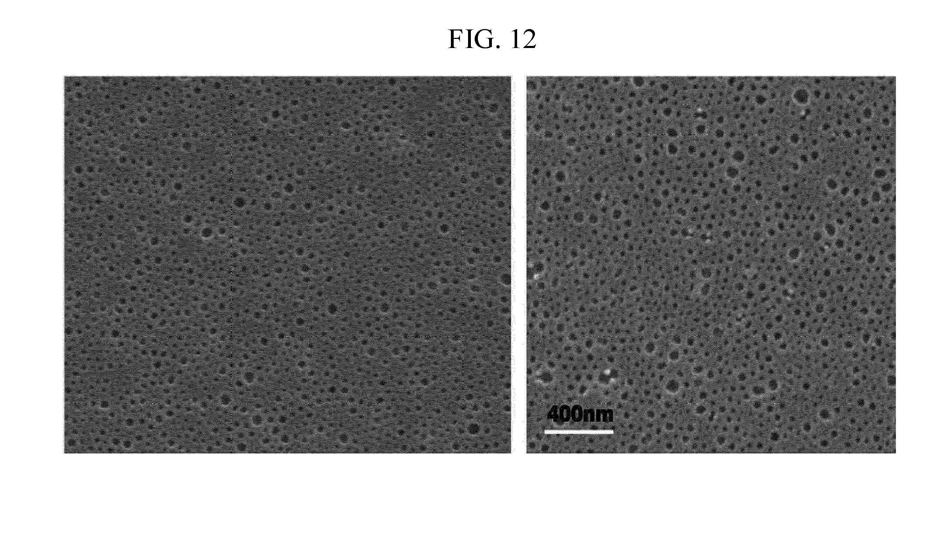

FIG. 12 is a SEM photograph of the liquid filtering structure manufactured in accordance with Exemplary Embodiment 2 of the present invention.

From FIG. 12, it may be seen that the filtering layer including the nanopores was well formed in the porous support layer.

### Exemplary Embodiment 3

### Liquid filtering structure including PS-b-PAA nanopore filtering layer/polysulfone porous support layer (direct formation)

Polyethersulfone resin at 50 g, dimethylformamide at 270g, p-toluenesulfonic acid at 90 g, and polyvinyl pyrrolidone resin at 36 g were put in a dissolver, dissolved at a temperature of 60 °C, and then cooled at a temperature of 40 °C. After the solution was charged with nitrogen, decompression was performed for 12 hours in a vacuum state so that bubbles within the solution were sufficiently removed, and the solution was transferred to a casting surface (preparation step). A polyester film having a width of 300 mm was used as a support layer. Speed was controlled so that the polyester film stayed under humidity of 60 % for 80 seconds, and the solution was made to pass through the casting surface controlled so that the distance between a casting knife and a surface of the polyester film was 250 µm with a width of 250 µm. Thereafter, the polyester film was immersed in a coagulation tank including water at 5 °C. After checking that the solution was sufficiently solidified in the coagulation tank, the solution was moved to a washing tank at 60 °C (phase transfer step). After the washing was finished, redundant water on a surface of the precise filtering film was removed. The filtering film was fixed to a Teflon frame and then dried in an oven, thereby manufacturing a support layer in a flat film state (dry step).

The manufactured polysulfone porous support layer was immersed in deionized water, and a filtering layer directly including nanopores was coated on the polysulfone porous support layer instead of a Si wafer using the same process as that of Manufacturing Example 1, thereby manufacturing a liquid filtering structure.

### Exemplary Embodiment 4

### Liquid filtering structure including UV-curable resin-embedded nanopore filtering layer in AAO

Aluminum was anodized and then subjected to plasma processing on a film having a diameter of 25 mm and a thickness of 60 um (product name: Whatman Anodisc 25) through which pores having an average diameter of 200 nm penetrate for 20 minutes.

Thereafter, a UV-curable polymer (tripropylene glycol diacrylate/1-vinyl 2-pyrrolidone, Youngchang Chemical) was coated using a spin coating method and was filled in the pores by a capillary flow so that they had a thickness of about 100 nm. The UV-curable polymer was cured by radiating UV light for 90 seconds.

Cracks having a gap of about 10 - 20 nm in size were formed in the UV-curable polymer filled in the pores by the hardening and contraction of the UV-curable polymer, thereby obtaining a nanopore structure. Thereafter, baking and secondary plasma processing were performed.

The filtering layer had a thickness of about 100 nm, and the porous support layer had a thickness of about 60 nm.

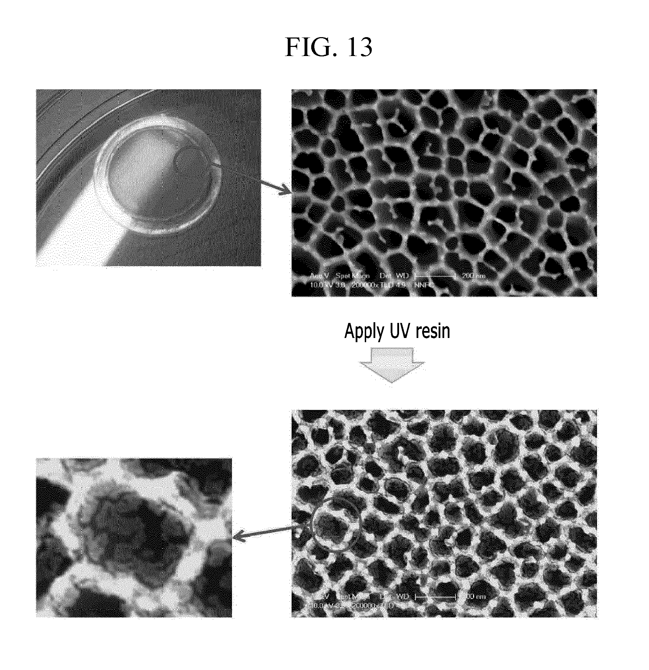

FIG. 13 is a SEM photograph of the liquid filtering structure manufactured in accordance with Exemplary Embodiment 4 of the present invention. From FIG. 13, it may be seen that the filtering layer including the nanopores was well formed in the pores of the porous support layer.

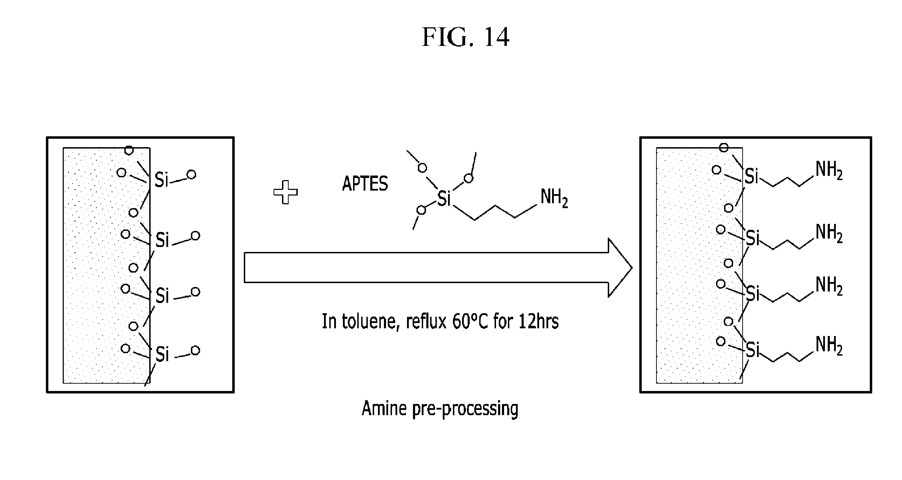

FIG. 14 is a diagram illustrating a process of attaching radicals to the internal walls of nanopores in accordance with Exemplary Embodiment 4 of the present invention. Amine NH₂ radicals were formed on the internal walls of nanopores using a condensation reaction between -OH radicals present on the internal walls of the nanopores and aminopropyl triethoxysilane (APTES), that is, alkoxysilane-amine.

Amide bonds were obtained by a reaction of arginine-phenylalanine (RF)-RF peptide (Genscript, USA) and the -NH₂ radicals. A carbodiimide coupling reaction was used in the amide covalent bond.

More specifically, after amine radicals were formed on the internal walls of the nanopores of the liquid filtering structure according to Exemplary Embodiment 4, the resultant was immersed in a solution in which an RF-RF peptide aqueous solution at 42.8 µl having a concentration of 1 mg/ml, an EDC (1-ethyl-3-(3-dimethylaminopropyl)carbodiimide) aqueous solution at 0.2 ml having a concentration of 15 mg/ml, and an NHS (N-hydroxysuccinimide) aqueous solution at 1.2 ml having a concentration of 3 mg/ml were mixed for one night so that they reacted with one another. Peptides were bonded to the internal walls of the nanopores through the amide bonds by a covalent bond between the carboxy radicals (COOH) of the peptides and the amine radicals NH₂ on the internal walls of the nanopores.

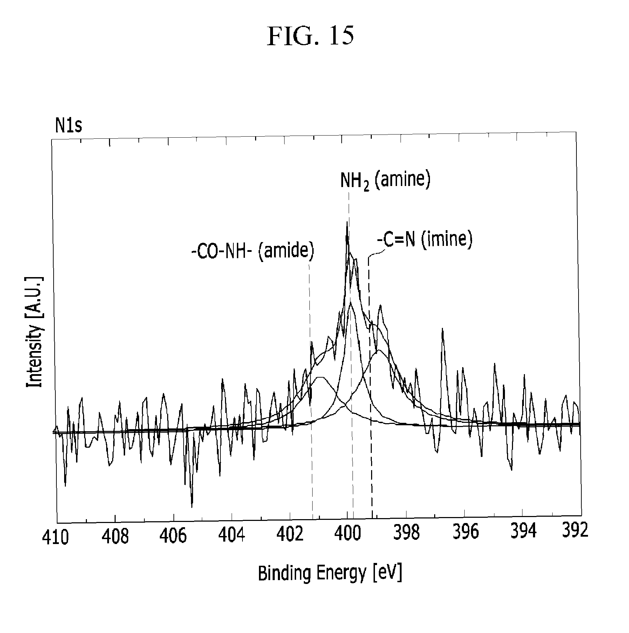

Whether RFRF was attached was checked by determining whether N atoms were present through Thermo VG K-alpha (XPS) analysis. FIG. 15 is an XPS graph of the liquid filtering structure manufactured in accordance with the exemplary embodiment 4 of the present invention. From FIG. 15, it may be seen that the functional group-containing compound was well combined with the internal walls of the nanopores.

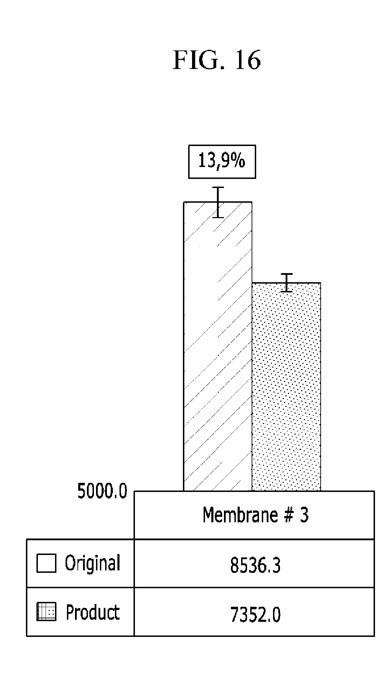

The manufactured liquid filtering structure was made to pass through Bovine Serum Albumin (BSA) that had positive charges of about 4 nm in size and to which fluorescent materials were attached, and a change of a concentration was checked by measuring fluorescent strength using a fluorescent microscope. FIG. 16 is a graph illustrating filtering results using the liquid filtering structure manufactured in accordance with Exemplary Embodiment 4 of the present invention. From FIG. 16, it may be seen that a concentration of molecules having a specific number of positive charges was reduced after the molecules passed through the liquid filtering structure according to the present invention because molecules having a specific number of positive charges were blocked by arginine having NH2 functional groups including the positive charges on the inner walls of the pores.

### Exemplary Embodiment 5

### Liquid filtering structure including Al₂O₃-embedded filtering layer through vacuum thin film deposition in AAO

Aluminum was anodized, and particles of deposition materials evaporated by applying electron beam energy to raw materials within an operation space in a vacuum state using e-beam evaporation on a film having an area of 25 mm and a thickness of 60 um (product name: Whatman Anodisc 25) through which pores having an average diameter of 20 nm penetrated were deposited within the pores, thereby manufacturing a nanopore filtering layer. In this case, the nanopores had an average diameter of about 5 nm and the nanopore filtering layer had a thickness of about 10 nm.

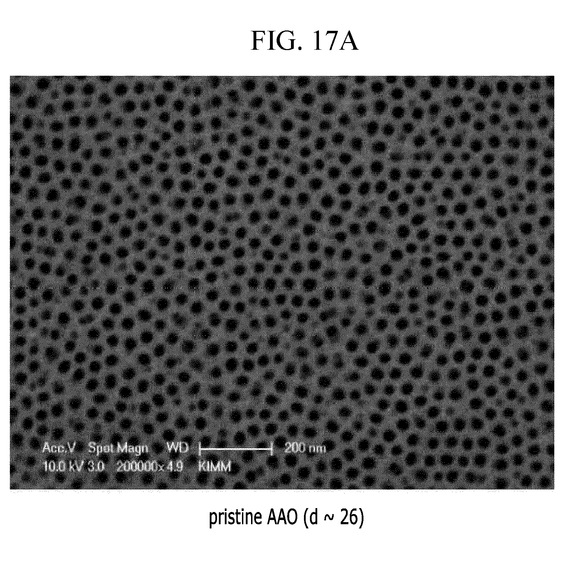

Aluminum oxide (Al₂O₃) having purity of 99.9 % was used as the raw material, and the deposition materials of about 10 nm in thickness were deposited so that the average diameter of the nanopores was reduced to about 10 nm or less. FIG. 17A is a SEM photograph of the porous support layer that is used in Exemplary Embodiment 5 of the present invention.

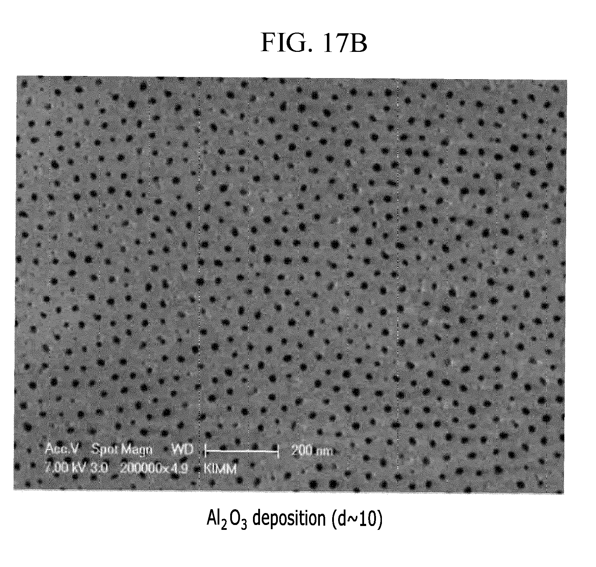

FIG. 17B is a SEM photograph of the liquid filtering structure manufactured in accordance with Exemplary Embodiment 5 of the present invention.

The degree of vacuum within the operation space when Al₂O₃ was deposited was about 1×10⁻⁵ Torr, electron beam energy applied to the raw materials was 600 W, 10 kV, and 60 mA, and an electron beam was formed using a Mg filament. The porous support layer had a thickness of about 60 µm.

### Exemplary Embodiment 6

### Liquid filtering structure including silica nanotube-embedded filtering layer in AAO through self-assembly deposition

Silica nanotubes were formed within the pores of an anodized aluminum (AAO) film having an area of 25 mm and a thickness of 60 um through which the pores having a diameter of 200 nm had penetrated. The silica nanotubes were manufactured using an evaporation-induced self-assembly method. When a solution in which a precursor for forming silica within the AAO film placed on a vacuum filtering apparatus and a structure-induced interface activator for forming nanopores were mixed was made to pass through the pores using vacuum, silica was grown on the inner walls of the AAO pores while the solvent of the solution was evaporated, and nanopores were formed by the self-assembly of the interface activator.

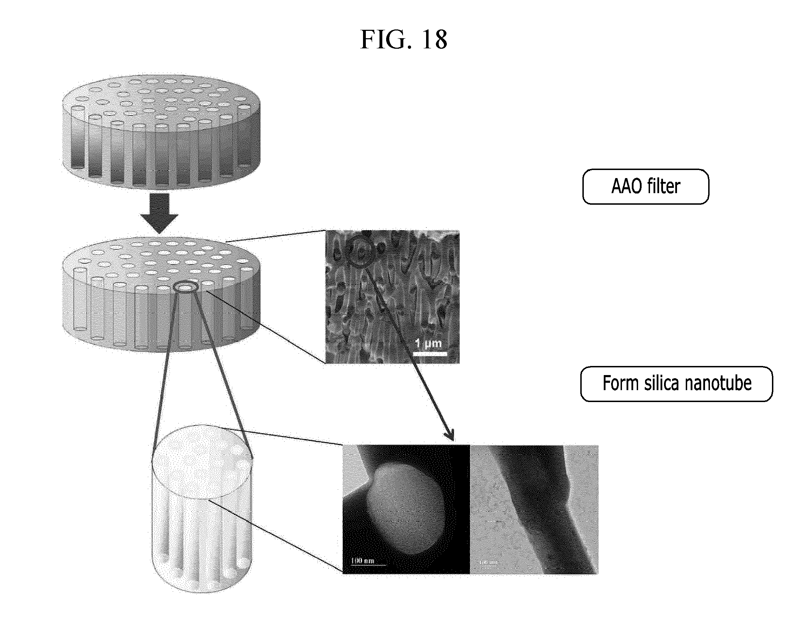

The nanopores of 3.5 nm or 7 nm in size were formed depending on the size of a structure-induced molecules used. The internal walls of the nanopores included -OH, and amine NH₂ radicals were formed on the internal walls of the nanopores through a condensation reaction between -OH and aminopropyl triethoxysilane (APTES), that is, alkoxysilane-amine. FIG. 18 is a TEM photograph of the process of manufacturing the liquid filtering structure in accordance with the exemplary embodiment 6 of the present invention.

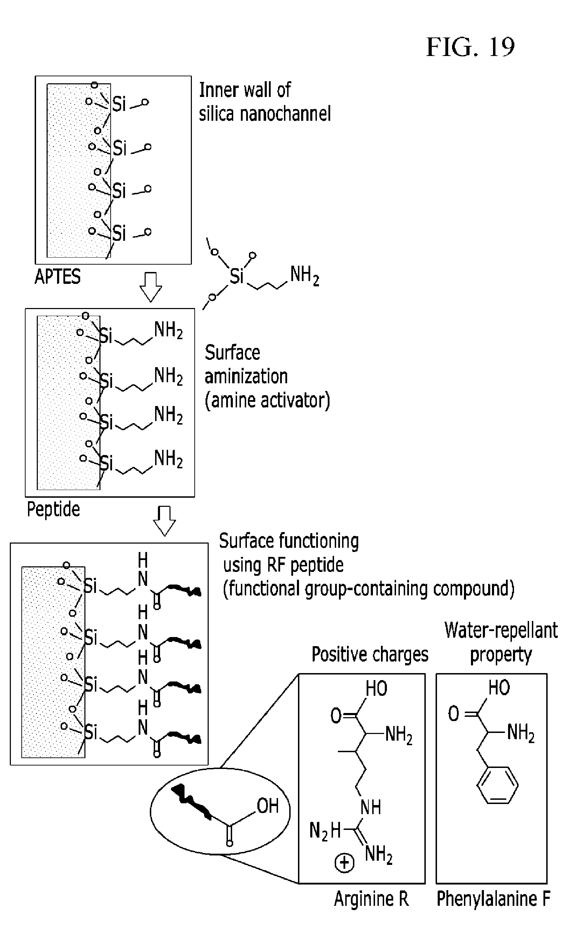

RFRF (R: arginine, F: phenylalanine), that is, a functional group-containing compound, was bonded to the inner walls of the silica nanochannel through an amide covalent bond with the amine NH₂ radicals. FIG. 19 is a schematic diagram illustrating a process of combining a functional group compound with the internal walls of the nanopores of the liquid filtering structure manufactured in accordance with Exemplary Embodiment 6 of the present invention.

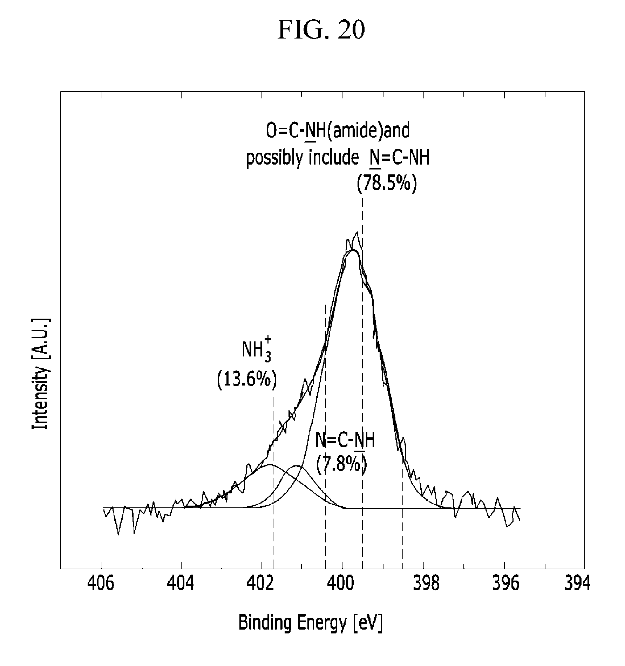

FIG. 20 is an XPS graph of the liquid filtering structure manufactured in accordance with Exemplary Embodiment 6 of the present invention. From FIG. 20, it may be seen that the functional group-containing compound was well combined with the internal walls of the nanopores.

Although the preferred embodiments of the present invention have been described, the embodiments are only illustrative. Those skilled in the art to which the present invention pertains may understand that various other modifications and equivalent embodiments are possible. Accordingly, the true scope of the present invention should be determined by the technical spirit of the following claims.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A liquid filtering structure comprising a filtering layer, the filtering layer comprising:
a nanopore structure unit comprising a plurality of nanopores; and
a functional group-containing compound comprising functional groups at one end,
wherein the nanopores penetrate the filtering layer in a thickness direction of the filtering layer and have an average diameter of 0.2 nm to 20 nm, and
the functional group-containing compound is chemically combined with internal walls of the nanopores.

2. The liquid filtering structure of claim 1, wherein the nanopore has a bottleneck shape or a tapered shape in the thickness direction of the filtering layer.

3. The liquid filtering structure of claim 2, wherein the nanopore has a minimum diameter of 10 nm or less.

4. The liquid filtering structure of claim 1, wherein the nanopore structure unit is made of one or more types of materials selected from a polymer, a copolymer, an organic compound, an inorganic compound, a metal compound, and a carbon compound.

5. The liquid filtering structure of claim 4, wherein the copolymer comprises one or more types selected from PS-b-PAA, PS-b-PEO, PS-b-PLA, PS-b-PMMA, PS-b-PB, and PS-b-PVP.

6. The liquid filtering structure of claim 1, wherein at least part of the filtering layer has a thickness of 100 nm or less.

7. The liquid filtering structure of claim 1, wherein the functional group-containing compound comprises functional groups having selectivity for water molecules.

8. The liquid filtering structure of claim 1, wherein functional groups of the functional group-containing compound comprise one or more types of functional groups having positive charges and negative charges.

9. The liquid filtering structure of claim 1, wherein functional groups of the functional group-containing compound comprise one or more types of polar and non-polar functional groups.

10. The liquid filtering structure of claim 1, wherein the functional group-containing compound comprises one or more arginine (R)-phenylalanine (F) units.

11. The liquid filtering structure of claim 1, wherein the liquid comprises water.

12. The liquid filtering structure of any one of claims 1 to 11, further comprising a porous support layer supporting the filtering layer.

13. The liquid filtering structure of claim 12, wherein the filtering layer is stacked on or embedded in the porous support layer.

14. The liquid filtering structure of claim 12, wherein the porous support layer is made of a polymer, anodized aluminum, or monochloroacetic acid.

15. The liquid filtering structure of claim 14, wherein the polymer comprises one or more types selected from, for example, polysulfone, polyethersulfone, polyphenylsulfone, polyetherethersulfone, polyetherketone, polyetheretherketone, polyphenylene ether, polydiphenylphenylene ether, polyvinylene cellulose acetate, cellulose diacetate, cellulose triacetate, polyphenylene sulfide, nitrocellulose, acetylated methylcellulose, polyacrylonitrile, polyvinyl alcohol, polycarbonate, organic siloxane carbonate, polyester carbonate, organic polysiloxane, polyethylene oxide, polyamide, polyimide, polyamideimide, and polybenzimidazole.

16. The liquid filtering structure of claim 12, wherein the porous support layer has a thickness of 40 to 100 µm.

17. The liquid filtering structure of claim 12, wherein an average size of pores on a surface of the filtering layer side in the porous support layer is 50 nm to 5 µm.

18. The liquid filtering structure of claim 12, wherein the liquid is water.
